# EUROPEAN PATENT APPLICATION

(11) **EP 4 628 276 A1**
(43) Date of publication of application: **08.10.2025**
(21) Application number: 25164523.0
(22) Date of filing: 18.03.2025
(51) Int. Cl.: B29C 43/24, B29C 43/46, B29C 48/00, B29C 48/08, B29C 48/88, B29C 55/00, B29C 55/06, B29K 105/00, B29L 7/00

(54) **A THERMOSTATED PLANT FOR PRODUCING A PLASTIC MATERIAL FILM TO BE THEN SUBJECTED TO A STRETCHING PROCESS AND RELATED METHOD**

(30) Priority: 05.04.2024 IT 202400007561
(71) Applicant: Colines S.P.A., 28100 Novara (IT)
(72) Inventor: LOMBARDINI, Nicola, I-28100 Novara (IT); ZACCHE', Vanni, I-28100 Novara (IT)
(74) Representative: Long, Giorgio

(57) **Abstract**

A calendering and stretching plant (1) for producing a stretched mono-material polymer film, comprising a flat extrusion head (10) placed upstream of a calender (20), and a stretching unit (30) placed downstream of the calender (20), wherein the calender (20) comprises at least a pair of calendering rollers, i.e., a first calendering roller (21), or casting roller, and a second calendering roller (22), or pressing roller, **characterized in that** the flat extrusion head (10) is placed at an operating distance X from said calender (20) of between 100 mm and 1000 mm with reference thicknesses of between 500 micron and 50 micron, wherein the greater the thickness, the smaller the distance X and vice-versa, and wherein the casting roller (21) and the pressing roller (22) are provided with a controlled cooling/heating system.

## Description

The present invention relates to a plant for producing a stretched mono-material polymer film and related method.

The production of relatively thin plastic film (hereinafter referred to as "film") suitable for flexible packaging, whether domestic or industrial, has been growing more or less steadily for several decades, and product quality is also constantly evolving and specializing along with quantity demand.

Plastic material films are currently made and used, which are subjected to a general stretching process, after production thereof, which process can involve only one of the two predominant dimensions of the film or both directions, at different times, rather than simultaneously.

According to the prior art, such a stretching process can be carried out both immediately downstream of the film production and on a different and separate line.

In recent years, various national governments have become generally aware of the need to promote and ensure the widest recycling of plastics, with the dual purpose of reducing the involved amount thereof and therefore reducing the emission of CO₂ into the environment.

With reference to the specific field of flexible packaging, in this context, the aforesaid "stretching" process, i.e., increasing the length (or width) of the film, is becoming more and more important, at the expense of the thickness thereof. This is done using specific MDO (Machine-Direction-Orientation) and TDO (Transversal-Direction-Orientation) operating units, consisting of a series of rollers traveling at different speeds, typically incremental. Above all, the concept of machine-direction orientation (MDO) is gaining increasing favor due to the reduced complexity thereof.

For reasons related to the recyclability of the packaging, the market is calling for the option to use a mono-material film, in particular a PE-based film clearly characterized by the peculiarities that a film suitable for the application must have (i.e., temperature resistance to promote the sealing of the inner PE film and sufficient stiffness to maintain the print pitch). Polyethylene-based printed flexible packaging has always been the bulk of the whole market (about 60% of the total).

Thereby, the final product would thus be configured as a "mono-material", which definition is conventionally given to all products made of at least 95% materials belonging to the same family (in this case, that of polyethylenes).

Indeed, the presence of substrates, such as print and "glue" in the lamination process, is always well below 5% of the total: therefore, a condition similar to the above would fall squarely within the mono-material industry.

The only way to give a PE-based film the aforesaid physical-mechanical features is specifically by means of a machine-directed MD stretching process since the stiffness of the product can be greatly increased. Indeed, the elastic limit of the film is abundantly exceeded, permanently deforming it in the plastic step thereof while simultaneously increasing the thermal resistance features thereof.

Obviously, the type of resin used must also be suitable, and in particular it is substantially (but not exclusively) necessary to use a substantial relative amount of the so-called high-density polyethylene, or HDPE (High-Density Poly-Ethylene).

In general, mono-material films made of polyethylene are multi-layer films, i.e., made up of several layers of different types of polyethylene, from HDPE to LLDPE.

Italian patent application N. 102022000015984 to the same Applicant describes a plant for producing a film of plastic material to be then subjected to a stretching process and the related method. In particular, there is described a plant having the main purpose of producing a film preferably based on polyethylene, whether of low density, medium density, high-density or of any other type.

The aforesaid patent application relates to calendering technology, which substantially differs from the so-called "cast" technology, based on the option of gradually cooling the molten polymer (referred to in short as "melt") by contact with a cooled roller, an operation performed at the same time as the MD stretching of the melt until the so-called "frost line" is reached, i.e., the point when the melt temperature drops by such an extent as to make the reaction thereof completely plastic.

In other words, the frost line identifies the temperature at which, in order to obtain plastic deformations, it is necessary to apply a considerable force to the film, having different orders of magnitude greater than the one needed to deform the melt in the gel state. Therefore, it is apparent that between the first contact point of the melt on the roller and the frost line, there is a spatial difference quantifiable in several tens of centimeters, also in meters (according to the outer diameter of the same roller); in other words, in the whole of this section there is a decreasing speed Δ between the roller and the melt until it zeroes in the point corresponding to the frost line.

Whereas, in calendering technology, the contact point of the melt with the casting and pressing rollers coincides exactly with the frost line, because there clearly cannot be any type of relative sliding between the same elements, i.e., the speeds must coincide (homokinetic melt with the calender).

Such a situation implies a series of problems related to the stabilization and performance of the calendering process, because:
- it is impossible to consider reaching the contact point between the calendering rollers ("nip point") with an excessively high melt temperature, as this would involve the risk of having a relative sliding between said elements also after the nip point, which would make it impossible to manage the film profile correctly;
- if the distance between the extrusion die and the nip point were reduced too much, there would be the risk of having the so-called "draw resonance", caused by the excessive inconsistency of the melt that, due to the low "melt strength" thereof, could in fact go in resonance, again making it impossible to manage the profile.

Therefore, it is necessary to reach the nip point with the correct temperature of the melt, i.e., just below the Vicat, to avoid the above problems.

However, it should be noted that, as said, the films often consist of a plurality of layers, each of which can also contain mixtures of different types of polyethylene, which can have significantly different Vicat values from one another: consider that a linear low-density polyethylene (LLDPE) can commonly have a Vicat of less than 100°C, while a high-density polyethylene (HDPE) can have a Vicat even close to 130°C.

As a result, the melt temperature must be forcibly lower than the lowest of the various Vicat temperatures present in the film.

However, as said above, downstream of the formation thereof, the polyethylene films are subjected to an MDO stretching process. Such an MDO stretching process is carried out by bringing the film to a temperature close to the Vicat temperature, so as to significantly reduce the resistance thereof to traction (i.e., the secant module), in order to perform the stretching with a minimum supply of energy. In this case, the Vicat temperature to which reference must be made can only be the highest of those of the various polymers forming the film (which, as seen previously, in most cases, consists of a plurality of layers of polyethylenes of different type); as a result, after calendering it will be necessary to heat the film once more to raise the temperature thereof again.

It is a general object of the present invention to provide a plant and method, capable of overcoming the aforesaid drawbacks of the prior art in a highly simple, inexpensive and particularly functional manner, in particular which are capable of ensuring optimum control of the melt and the film temperature during the various steps of the process.

It is another object of the present invention to provide a plant and method for producing a stretched polymer film which allows a saving in energy as compared the known methods.

The aforesaid objects are achieved by a plant for producing a stretched polymer film and a related method carried out according to the appended claims.

The structural and functional features of the present invention and the advantages thereof over the prior art will become even more apparent from a discussion of the following description, also referring to the accompanying diagrammatic drawings, showing an embodiment of the finding itself. In the drawings:
- figure 1 shows a concise diagram of a plant according to the invention for producing a stretched plastic material film;
- figure 2 shows a concise diagram of a detail of the plant in figure 1 according to a variant.

In the following description, in order to illustrate the figures, the same reference numerals are used to indicate structural elements having the same function. Moreover, for clarity of illustration, some reference numerals cannot have been repeated in all figures.

Indications such as "vertical" and "horizontal," "upper" and "lower" (in the absence of other indications) must be read with reference to the assembly (or operating) conditions and referring to the normal terminology in use in current jargon, where "vertical" indicates a direction substantially parallel to that of the gravity force vector "g" and horizontal indicates a direction perpendicular thereto.

The term "melt" is understood to mean the molten plastic material extruded from an extrusion head. In particular, for the purposes of the present invention, a mono-material or multi-layer film is used, preferably a polyethylene film.

The term "frost line" is understood to mean the point when the melt temperature drops to such an extent as to make the reaction thereof completely plastic.

The term "nip point" is understood to mean the contact point between the calender rollers and the melt, i.e., the point when the calender rollers are substantially tangential, with a separation space such as to define the thickness of the film being formed.

The term "LLDPE" is understood to mean low-density linear polyethylene.

The term "HDPE" is understood to mean high-density polyethylene.

The term "Vicat" or "Vicat temperature" is understood to mean the softening temperature of a plastic material, i.e., the temperature at which a round indentor with a cross-section of 1 mm², subject to a load of 10 N o 50 N, penetrates a specimen of said plastic material by 1 mm.

The term "active air cooling" is understood to mean a cooling system for cooling the melt immediately downstream of an extrusion head by means of a forced cooling air flow.

The term "just less than the Vicat temperature" or "just below the Vicat temperature" is understood to mean a temperature from 1% to 10% lower than the Vicat temperature of a given polymer.

In order to overcome the aforesaid technical problems and obtain an optimum method for producing a stretched polymer film, the present invention has made some changes to the plant, which will be described below.

According to a first aspect, the present invention suggests using a calendering system which has the option of approaching and distancing itself, at will, (within the limits dictated by the geometry of the system) from the extrusion die, so as to allow determining the melt temperature in the nip-point with a good degree of approximation.

In fact, in the light of the above, it has been seen that is absolutely essential to have the option of varying, also significantly, the distance between the extrusion die and the nip point, which distance is clearly a function of both of the range of the line (i.e., of the amount of thermal content to be "disposed of" into the air by the melt before reaching the nip point), and the thickness of the film to be produced, on which the residence time in the air thereof depends.

In certain preferred embodiments, no air cooling jet is provided between the extrusion die and the calender.

Furthermore, as said before, in the case of multi-layer material made of different types of polyethylene, the melt reaches the nip point at a slightly lower temperature than the lowest Vicat of the polymers used, while the film fed to the stretching unit must have a temperature slightly less than the highest Vicat of the materials used. Whereas, when using a single type of polyethylene, the temperature must be kept as close as possible to the Vicat during the whole process.

With a view to energy saving, the inventors of the present patent application have concluded that the best way to carry out such a process is to utilize the latent melt heat of the melt, i.e., to minimize the loss in temperature thereof from the extrusion head to the stretching unit, keeping the melt temperature just below that of the Vicat.

Bearing in mind the Vicat differences that can be found in a multi-layer mono-material film and thus the different temperature required in the calendering and stretching steps, a highly critical aspect of the invention is the management and definition of the temperature of the film so as to find the best compromise between the need to ensure a correct control of the profile on calendering and the desire to have minimal thermal energy consumption to bring the film to conditions such as to be correctly stretched.

In a preferred embodiment of the invention, such a precise management of the thermal profile of the film was obtained from the synergic combination of the adjustment of the distance between the extrusion head and the calender (as said above) with the thermostatation/thermal-conditioning of the calender. In order to pursue this aim, it was necessary to thermostate said rollers, not only under cooling, but also heating, i.e., with a "thermal-conditioning" system.

Another important aspect of the present invention consists in determining a correct spatial arrangement of the calendering and stretching units, so as to maximize the efficiency of the entire system. In fact, it has been seen that the utilization of the latent melt heat is the key to obtain maximum efficiency from the energy point of view, and regardless of the roller thermostatation system, it is apparent that the smaller the distance between the calendering unit and the MDO unit, the greater the overall efficiency of the system, by virtue of the reduced thermal dispersions into the environment.

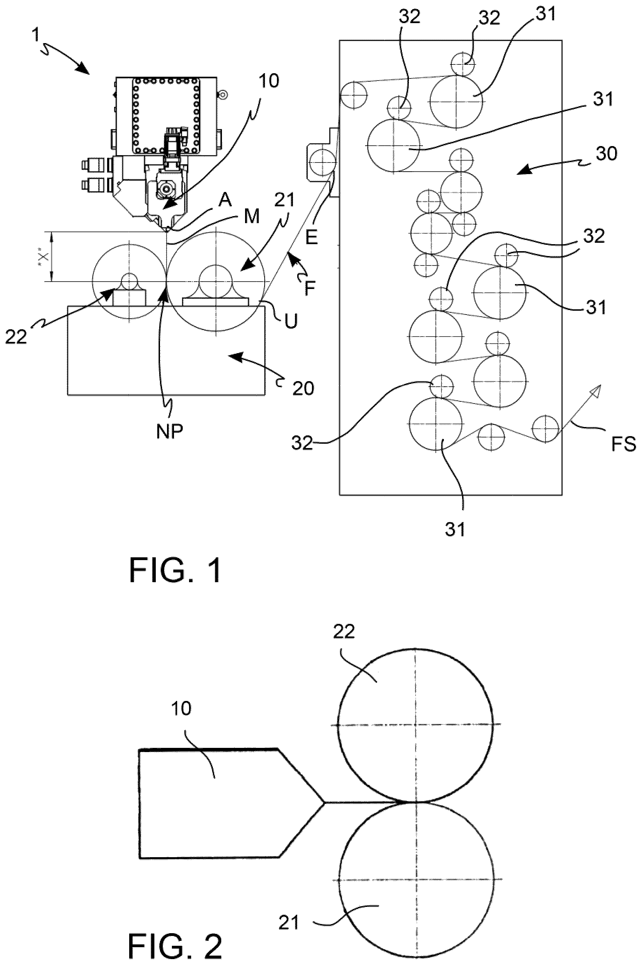

Now, with reference to figure 1, in an embodiment, the calendering and stretching plant of the invention, globally denoted with reference numeral 1, comprises a flat extrusion head 10, placed upstream of a calender 20, and a stretching unit 30 placed downstream of the calender 20.

The flat extrusion head 10 is placed at an operating distance X from said calender 20. The term "operating distance" is understood to mean the distance between the dispensing point A of the melt M from the extrusion head 10 and the nip point NP as defined previously.

The distance X as defined above is preferably between 100 mm and 1000 mm with reference thickness of between 500 microns and 50 micron, where the greater the thickness, the smaller the distance X and vice versa.

The distance X can be fixed at the time of construction of the plant 1 or, in certain embodiments, it can vary in one same plant 1. In this latter case, the extrusion head 10 or the calender 20 can be supported on an adjustment system for adjusting the distance X, such as a slide sliding on a guide (not shown) or the like.

In certain embodiments, the width size of said flat extrusion head 10 can vary from about 1000 mm to about 5000 mm.

The calender 20 comprises at least a pair of calendering rollers, i.e., a first calendering roller 21, or casting roller, and a second calendering roller 22, or pressing roller. Such an arrangement creates a passage through the nip point NP obtained between the two facing and cooperating rollers, which advantageously allows avoiding the entrapment of air between the melt M coming out of the flat extrusion head 10 and the calendering rollers 21, 22 themselves that will form a film F.

In certain embodiments, the diameter of said calendering rollers 21, 22 can vary between about 200 mm to about 800 mm.

According to the invention, special attention must be paid to the construction and surface finishing, especially of the calendering rollers 21, 22, which are the ones that give the film the optical and flatness qualities thereof.

Since the maximum heat transfer must be ensured in order to accurately manage the cooling process, the casting roller 21 should preferably (but not exclusively) be made of ferrous material, which has a conductive heat exchange coefficient indicatively equal to at least 15 W/mK. Typical examples can include structural steels with chrome-plated and mirror-polished surfaces, or having extremely low roughness (Ra < 1 µm), copper fillers, or other.

Even more important and delicate is the configuration of the pressing roller 22, which must fulfill multiple purposes, such as:
- ensuring the correct temperature control of the film face in contact therewith,
- ensuring an even contact meniscus between the two rollers, essential to have an even film thickness,
- having non-stick properties to prevent the melt from sticking to the surface thereof,
- having surface finishing features adapted not to "mark" or damage the film, i.e., ensuring correct surface flatness.

All these features could be met using a pressing roller 22 having similar features to those of the casting roller 21 (i.e., characterized by a construction of ferrous material and a chrome-plated, mirror-polished surface, for example) if the thickness of the film to be produced were significant (preferably but not exclusively over 500 µm) so that it could assume the state of a "slab".

On the contrary, when the reference thicknesses of the films F are about 20 ÷ 30 µm downstream of the stretching, while considering a stretching ratio of up to about 6:1 (considered as the upper limit for the products of interest in this document), it is necessary to produce a film F (upstream of the stretching) having a thickness of at most between about 180 and 200 µm.

For this kind of thickness, the concept of calendering between two rigid rollers becomes difficult to apply due to the dimensional tolerances of the rollers, which become dangerously of the same order of magnitude as the film to be produced. Indeed, with the calendering between two rigid rollers, the contact meniscus is substantially reduced to a line, therefore the ensured thickness uniformity is provided by the presence of the so-called "buildup" of molten material above such a joining line.

Therefore, the pressing roller 22 will preferably comprise a coating of a deformable, non-stick material, which can thus considerably increase the contact area (or meniscus) between the two calender rollers and thus "compensate for" the lack of uniformity in the buildup.

The coating of such a pressing roller 22 can thus be of various types, such as:
- a coating of silicone rubber, suitable for working at high temperatures and especially having remarkable elastic recovery even under hot working conditions,
- a coating of composite materials, containing silicon or other minerals which raise the operating temperature thereof without compromising the low hardness and high elastic recovery properties thereof,
- an outer Teflon sleeve, with a thickness typically but not exclusively varying between 0.5 mm and 5 mm, ensuring thermal resistance and non-stick properties suitable for the process.

Hardness values typical of the roller coating materials can vary from 50 Sh to 80 Sh, although there is still the possibility of using significantly lower or higher hardnesses (said range is simply shown as the most suitable for the application).

As said previously, again to achieve correct control of the melt temperature, active air cooling is preferably avoided between said extrusion head 10 and said calender 2.

An essential feature of the present invention lies in the use of thermostated or, more correctly, thermo-climatized calendering rollers 21, 22, i.e., provided with a controlled cooling/heating system.

Said controlled cooling/heating system is configured to operate in a temperature range of between 20°C and 160°C, preferably between 40°C and 140°C, and comprises heating means, such as electric resistors, gas, IR, and induction systems, or the like, and, optionally, a transfer fluid both under cooling and heating, preferably selected from air, water, and oil.

The following methods can be adopted for the cooling/heating system:
- in the case of transfer fluids, it is possible to include solutions having an internal channel and one or more coils, or
   a solution with a simple double wall without internal coiling, or
   a "barrel" solution, i.e., with no channel, but with the roller completely full of transfer fluid;
- in the absence of transfer fluids, in the case of IR heating or heating with other radiating systems, it is possible to have a series of fixed or rotating lamps inside the roller, which provide for the direct heating thereof by means of radiation, or
in the case of heating by inductors, the positioning inside the roller of coils generating a magnetic field for directly heating the ferrous material forming the roller itself.

The stretching unit 30 comprises a plurality of thermostated rollers 31 and counter-rollers 32, placed in sequence and operating at an increasing rotation speed greater than the rotation speed of the rollers 21, 22 of the calender 20, so as to impart a stretching action to the polymer film (F) coming out of the calender 20 and produce a stretched polymer film FS by means of a convenient stretching ratio that, as said before, is in the range from 2:1 to 6:1.

The rollers 31 of the stretching unit 30 are thermostated at a temperature just below the Vicat temperature of the polymer forming the film F and, in the case of a multi-layer mono-material, such as a material consisting of polyethylenes of different type, at a temperature just below the highest of the Vicats of the polymers forming the film F.

To this end, the speed of the plastic film F at the outlet of the calender 20 is between 5 m/min and 100 m/min, while the speed of the stretched plastic film FS (downstream of the stretching unit 30) is in the range of 15 ÷ 500 m/min when wound.

The stretching unit 30 preferably produces an MDO stretching.

Another important, but not essential, parameter is the distance between the calender 20 and the stretching unit 30, understood as the length of the plastic film F between the outlet point U from the casting roller 21 and the inlet point E onto the first roller of the stretching unit 30. Such a length will preferably be between 500 and 5000 mm, preferably between 500 and 2000 mm, more preferably between 500 and 1000 mm.

The mechanical characterization of the production plant can obviously take different embodiments from those shown in figure 1, since it is possible to provide structural embodiments that, in some ways, follow similar arrangements to those of current calenders.

For example, figure 2 summarily shows a variant, where the calendering rollers 21, 22 are arranged according to a common vertical axis, one on top of the other, with the flat extrusion head 10 horizontal.

The invention also related to a method for producing a stretched mono-material polymer film comprising the steps of:
a) providing a plant comprising an extrusion head for said material in the molten state, a calender placed downstream of said extrusion head, and a stretching unit placed downstream of said calender;
b) adjusting the distance X between said extrusion head and the nip point of said calender so as to lower the melt temperature to a temperature T1 just below the Vicat temperature of the polymer material or, in the case of a multi-layer material, just below the lowest of the Vicat temperatures of the polymers forming the material;
c) calendering the melt in said calender, keeping the temperature of the film F being formed at said temperature T1 or, in the case of a multi-layer material, raising the temperature of the film (F) to a temperature T2 just below the highest of the Vicat temperatures of the polymers forming the material;
d) stretching the film F in said stretching unit at said temperature T1 or, in the case of a multi-layer material, at said temperature T2, applying a stretching ratio of between 2:1 and 6:1.

In certain embodiments, no active air cooling is placed between said extrusion head and said calender.

In preferred embodiments, said plant in step a) is the plant 1 described above.

In preferred embodiments, said mono-material film is a polyethylene film, preferably a mono-material film made of different types of polyethylene, comprising LLDPE and HDPE, but also other polymers, again belonging to the family of polyethylenes, such as LDPE, MDPE, mLLDPE.

The scope of protection of the present invention is defined by the appended claims.

## Claims

1. A calendering and stretching plant (1) for producing a stretched mono-material polymer film, comprising a flat extrusion head (10) placed upstream of a calender (20), and a stretching unit (30) placed downstream of the calender (20), wherein the calender (20) comprises at least a pair of calendering rollers, i.e., a first calendering roller (21), or casting roller, and a second calendering roller (22), or pressing roller, **characterized in that** the flat extrusion head (10) is placed at an operating distance X from said calender (20) of between 100 mm and 1000 mm with reference thicknesses of between 500 micron and 50 micron, wherein the greater the thickness, the smaller the distance X and vice-versa, and wherein the casting roller (21) and the pressing roller (22) are provided with a controlled cooling/heating system.

2. The plant (1) according to claim 1, wherein the extrusion head (10) or the calender (20) is supported on a system for adjusting the distance X.

3. The plant (1) according to claim 1 or 2, wherein the width size of said flat extrusion head (10) varies from about 1000 mm up to about 5000 mm.

4. The plant (1) according to any one of claims 1 to 3, wherein
the casting roller (21) consists of a material with a conductive heat exchange coefficient equal to at least 15 W/mK and with a roughness Ra < 1 µm, and
the pressing roller (22) comprises a coating selected from:
- a coating made of silicone rubber,
- a coating made of composite materials, e.g. containing silicon or other minerals,
- an outer Teflon sheath, with a thickness preferably varying between 0.5 mm and 5 mm,
wherein preferably the coating materials have hardness values from 50 Sh up to 80 Sh.

5. The plant (1) according to any one of claims 1 to 4, wherein the controlled cooling/heating system is configured to operate in a temperature range of between 20°C and 160°C, preferably between 40°C and 140°C, and comprises heating means preferably selected from electric resistors, gas, IR, and induction systems and, optionally, a transfer fluid both under cooling and heating, preferably selected from air, water, and oil.

6. The plant (1) according to any one of claims 1 to 5, wherein the stretching unit (30) comprises a plurality of thermostated rollers (31) and counter-rollers (32), placed in sequence and operating at an increasing rotation speed greater than the rotation speed of the rollers (21, 22) of the calender (20), so as to impart a stretching action to the plastic film (F) coming out of the calender (20) and produce a stretched plastic film (FS) with an MDO stretching ratio in the range from 2:1 to 6:1.

7. The plant (1) according to claim 6, wherein the rollers (31) of the stretching unit (30) are thermostated at a temperature just below the Vicat temperature of the polymer forming the film (F) and, in the case of a multi-layer mono-material, such as a material consisting of polyethylenes of different type, at a temperature just below the highest of the Vicats of the polymers forming the film (F).

8. The plant (1) according to any one of claims 1 to 7, wherein the speed of the plastic film (F) at the outlet of the calender (20) is between 5 m/min and 100 m/min, while the speed of the stretched plastic film (FS) downstream of the stretching unit (30) is in the range of 15 ÷ 500 m/min when wound.

9. The plant (1) according to any one of claims 1 to 8, wherein the distance between the calender (20) and the stretching unit (30), understood as the length of the polymer film (F) between the outlet point (U) from the casting roller (21) and the inlet point (E) on a first roller of the stretching unit (30) is between 500 mm and 5000 mm, or between 500 mm and 2000 mm, or between 500 mm and 1000 mm.

10. The plant (1) according to any one of claims 1 to 9, wherein no active air cooling is placed between said extrusion head (10) and said calender (20).

11. A method for producing a stretched mono-material plastic film comprising the steps of:
a) providing a plant comprising an extrusion head for said material in the molten state, a calender placed downstream of said extrusion head, and a stretching unit placed downstream of said calender;
b) adjusting the distance X between said extrusion head and the nip point of said calender so as to lower the melt temperature to a temperature T1 just below the Vicat temperature of the polymer material or, in the case of a multi-layer material, just below the lowest of the Vicat temperatures of the polymers forming the material;
c) calendaring the melt in said calender, keeping the temperature of the film F being formed at said temperature T1 or, in the case of a multi-layer material, raising the temperature of the film (F) to a temperature T2 just below the highest of the Vicat temperatures of the polymers forming the material;
d) stretching the film F in said stretching unit at said temperature T1 or, in the case of a multi-layer material, at said temperature T2, applying a stretching ratio of between 2:1 and 6:1.

12. The method according to claim 11, wherein no active air cooling is placed between said extrusion head and said calender.

13. The method according to claim 11 or 12, wherein the plant is as delineated in any one of claims 1 to 10.
